# EUROPÄISCHE PATENTSCHRIFT

(11) **EP 1 648 801 B1**
(45) Veröffentlichungstag und Bekanntmachung des Hinweises auf die Patenterteilung: **18.04.2007**
(21) Anmeldenummer: 04763522.2
(22) Anmeldetag: 27.07.2004
(51) Int. Cl.: B65G 1/14

(54) **STAPELSÄULE**
STACKING COLUMN
COLONNE D'EMPILAGE

(30) Priorität: 31.07.2003 DE 10335592
(43) Veröffentlichungstag der Anmeldung: 26.04.2006
(73) Patentinhaber: MTS Maschinenbau GmbH, 88512 Mengen (DE)
(72) Erfinder: STROBEL, Gustav, 88348 Saulgau (DE)
(74) Vertreter: Weiss, Peter
(86) Internationale Anmeldenummer: PCT/EP2004/008385
(87) Internationale Veröffentlichungsnummer: WO 2005/012142

(56) Entgegenhaltungen:
- EP-A- 0 562 417
- DE-A- 3 619 688
- DE-A- 3 811 310
- DE-A- 4 020 864
- DE-A- 4 133 464
- DE-C- 3 536 251

## Beschreibung

Die Erfindung betrifft eine Stapelsäule zum Halten von Lagergütern, insbesondere von Karosserieteilen auf Tragarmen von Klinkenhebeln, die um eine Drehachse von einer Ruhestellung in eine Arbeitsstellung drehen, wobei mehrere Klinkenhebel übereinander oder nebeneinander angeordnet sind und in Wirkverbindung stehen und mit dem Klinkenhebel ein Stützelement mitdreht, welches in Arbeitsstellung auf oder an einem vorgängigen Klinkenhebel aufsitzt oder anliegt,

### Stand der Technik

Stapelsäulen sind in vielfältiger Form und Ausführung bekannt. Meist handelt es sich um senkrechte Stapelsäulen, die in einem Viereck angeordnet sind. Derartige Stapelsäulen sind beispielsweise in der DE-PS 35 36 251 oder auch in der DE-OS 38 11 310 gezeigt.

Aus gewissen Gründen kann es sich auch als ratsam erweisen, diese Stapelsäulen schräg anzuordnen, wie dies in der DE-OS 41 33 464 gezeigt ist. Ferner besteht auch die Möglichkeit der horizontalen Anordnung der Stapelsäule nach der DE-OS 40 20 864.

Bevorzugt werden diese Stapelsäulen noch von einem Schutzprofil umgeben, wie es näher in der EP-A 93 10 42 23 beschrieben ist.

Bei all diesen Stapelsäulen ruht das Lagergut in oder an den Tragarmen der Klinkenhebel, wobei diese Klinkenhebel jedoch sofort nach Entlastung in ihre Ruhelage zurückfallen. Ferner hat sich herausgestellt, dass beispielsweise beim Transport, wenn das Gestell infolge Fahrbahnunebenheiten springt, einzelne Klinkenhebel wieder in ihre Ruhelage zurückklappen. Hierzu ist aus der DE 36 19 096 A1 bekannt, an einen Klinkenhebel ein Stützelement anzuformen, das sich mit dem Klinkenhebel mitdreht und in Arbeitsstellung auf einem vorgängigen Klinkenhebel aufsitzt.

### Aufgabe

Der vorliegenden Erfindung liegt die Aufgabe zugrunde, eine Stapelsäule zu schaffen, bei der die Klinkenhebel sehr einfach hergestellt und funktionell geformt sind.

### Lösung der Aufgabe

Zur Lösung dieser Aufgabe führt, dass der Klinkenhebel aus einem Blechzuschnitt besteht, von dem das Stützelement abgekantet ist.

Dies bedeutet, dass sich das Stützelement in Arbeitsstellung gegenüber dem unteren Klinkenhebel abstützt und nicht ohne weiteres auch nach Entlastung in seine Ruhelage zurückfallen kann. Bevorzugt ist deshalb das Stützelement selbsthemmend festgelegt.

In einem anderen, bevorzugten Ausführungsbeispiel der Erfindung soll das Stützelement einstückig mit dem Klinkenhebel verbunden sein. Dabei kann der Klinkenhebel insgesamt aus einem Blechzuschnitt hergestellt werden, von dem das Stützelement abgekantet wird. Für dieses Verfahren wird auch ohne Vorsehung eines Stützelementes selbständig Schutz begehrt. Es zeichnet sich dadurch aus, dass bei einem Blechzuschnitt jeweils seitlich eines Mittelteils zwischen dem Tragarm und einem Steuerarm Zungen vorgesehen und diese mit jeweils einer Ausnehmung versehen werden, die teilweise in das Mittelteil hineinreicht und jede Zunge im Bereich der Ausnehmung abgebogen wird. Das bedeutet, dass der Blechzuschnitt und die Ausnehmungen in einem Arbeitsgang hergestellt und das Abkanten in einem weiteren Arbeitsgang geschieht. Hierdurch wird erheblich Arbeitszeit eingespart. Die Ausnehmungen bilden Aufnahmen für die Drehachse, so dass keine gesonderten Ösen od. dgl. an dem Klinkenhebel vorgesehen werden müssen. Dies ist eine wesentliche Erleichterung der Herstellung des Klinkenhebels.

In einem bevorzugten Ausführungsbeispiel des Verfahrens werden dann vom Mittelteil noch der Tragarm und/oder der Steuerarm abgekantet, je nach dem, welche Traglage der Tragarm bzw. Steuerlage der Steuerarm einnehmen soll. Soll der Steuerarm auch als Anschlag bzw. Begrenzung für die Drehbewegung des Klinkenhebels dienen, so genügt es, eine Seitenwange von dem Steuerarm aufzukanten, die dann in Arbeitsstellung an der nachfolgenden Drehachse anschlägt.

Wird ein derartiger Klinkenhebel im Zusammenhang mit dem oben erwähnten Stützelement verwendet, so kann es sich als ratsam erweisen, eine Stirnfläche des Stützelementes zumindest teilweise gerundet auszubilden und dem Klinkenhebel noch eine Führungszunge zuzuordnen, welche ein Aufgleiten des Stützelementes auf den vorgängigen Klinkenhebel erleichtert. Diese Führungszunge dient vor allem der Hemmung des Stützelementes, so dass dieses nicht ohne weiteres aus der Stützlage gelangt. Zu diesem Zweck kann es günstig sein, die Führungszunge schräg nach oben abzukanten oder etwas gewölbt auszubilden. Die Wölbung spielt dann selbstverständlich mit dem Radius der Stirnfläche des Stützelementes zusammen.

Ferner ist bei einem Ausführungsbeispiel der Erfindung daran gedacht, dass das Stützelement mit einem vor ihm betätigten Klinkenhebel zusammenwirkt, so dass dieser Klinkenhebel über das Stützelement bspw. den nachfolgenden Klinkenhebel von einer Ruhelage in eine Bereitschaftslage oder auch von einer Bereitschaftslage in eine Arbeitslage bringen kann. In einem Ausführungsbeispiel ist hierfür ein Bolzen an dem vorhergehenden Klinkenhebel vorgesehen, der auf einen Fuss an dem Stützelement drückt und so ein Schwenken des nachfolgenden Klinkenhebel um dessen Drehachse bewirkt.

Bei einem weiteren Ausführungsbeispiel der Erfindung soll vom Klinkenhebel ein Anschlag aufragen, der in Arbeitsstellung der Drehachse des nachfolgenden Klinkenhebels anliegt. Hierdurch wird auf einfache Art und Weise der Drehweg des Klinkenhebels begrenzt.

Zur Bestimmung des Drehweges kann es sich als günstig erweisen, entweder die Breite des Anschlages oder den Aussendurchmesser der Drehachse wählbar auszugestalten. In letzterem Fall dürfte es wiederum einfach sein, der Drehachse einen Abstandsring aufzusetzen, dessen Aussendurchmesser wählbar ist.

Der Anschlag kann, sofern ein Klinkenhebel aus dem oben erwähnten Blechzuschnitt verwendet wird, der Einfachheit halber von der aufgekanteten Seitenwange gebildet werden.

Bevorzugt wird den so ausgestalteten Klinkenhebeln auch eine Verriegelung zugeordnet. Das bedeutet, dass der letzte Klinkenhebel in seiner Arbeitslage festgehalten wird. Hierzu ist bspw. ein Schieber vorgesehen, der einen Druckbolzen bewegen kann und diesen auf den obersten Klinkenhebel aufdrückt.

Bevorzugt ragen von dem Schieber sowohl der Druckbolzen, als auch ein Gewindeabschnitt oder Führungsbolzen ab, wobei beide jeweils ein parallel verlaufendes, geschwungenes Langloch durchsetzen. Auf diese Weise kann der Druckbolzen aus einer Ruhelage in eine Riegellage geführt werden.

Bevorzugt ist vorgesehen, dass der Schieber sowohl in Ruhelage als auch in Riegellage festgelegt werden kann, was durch einen Riegelbolzen geschieht, der ein entsprechendes Loch in einer Seitenwange durchsetzt. Aus diesem Loch kann der Riegelbolzen mittels eines Betätigungsknopfes gezogen werden, was bevorzugt gegen die Kraft einer Feder geschleht.

Bei bekannten Klinkenhebeln befindet sich oftmals in dem hinteren Bereich ein Gewicht, welches bewirkt, dass nach Abnahme des den Klinkenhebel belastenden Gegenstandes der Klinkenhebel in seine Bereitschafts oder Ruhelage zurückfällt. Insbesondere bei dem Abstutzen der Klinkenhebel gegeneinander durch die erfindungsgemässen Stützelemente kann es aber vorkommen, dass die Stützelemente dies durch ihre Stützwirkung erschweren. Um das Zurückfallen der Klinkenhebel in Bereitschafts- bzw. Ruhelage zu unterstützen, sollen deshalb Federn vorgesehen sein, welche den Klinkenhebel in Ruhelage drücken. D. h., der Klinkenhebel wird gegen die Kraft der Feder aus der Ruhelage in die Bereitschaftslage und bevorzugt auch In die Arbeitstage gebracht Bevorzugt befinden sich die Federn an einem gemeinsamen Federrechen.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Figur 1: eine perspektivische Ansicht einer erfindungsgemässen Stapelsäule in verkleinerter Ausführung;
- Figur 2: eine Frontansicht der Stapelsäule gemäss Figur 1;
- Figur 3: eine Seitenansicht der Stapelsäule gemäss Figur 1;
- Figur 4: eine Draufsicht auf die Stapelsäule gemäss Figur 1;
- Figur 5: eine perspektivische Ansicht des Wirkmechanismusses von Klinkenhebeln im Inneren einer Stapelsäule;
- Figur 6: eine perspektivische Ansicht eines erfindungsgemässen Klinkenhebels;
- Figur 7: eine Frontansicht von zwei Klinkenhebeln mit einer weiteren Ausführungsvariante eines Stützelementes für die hier aber nicht Schutz begehrt wird;
- Figur 8: eine perspektivische Ansicht eines Teil eines weiteren Ausführungsbeispiels einer erfindungsgemässen Stapelsäule, für die hier aber nicht Schutz begehrt wird.
- Figur 9: eine teilweise dargestellte Draufsicht auf eine geöffnete Stapelsäule im Bereich einer Verriegelung;
- Figur 10: eine Frontansicht des Bereichs aus der Stapelsäule gemäss Figur 9;
- Figur 11: eine schematisch dargestellte Seitenansicht eines weiteren Ausführungsbeispiels einer Stapelsäule.

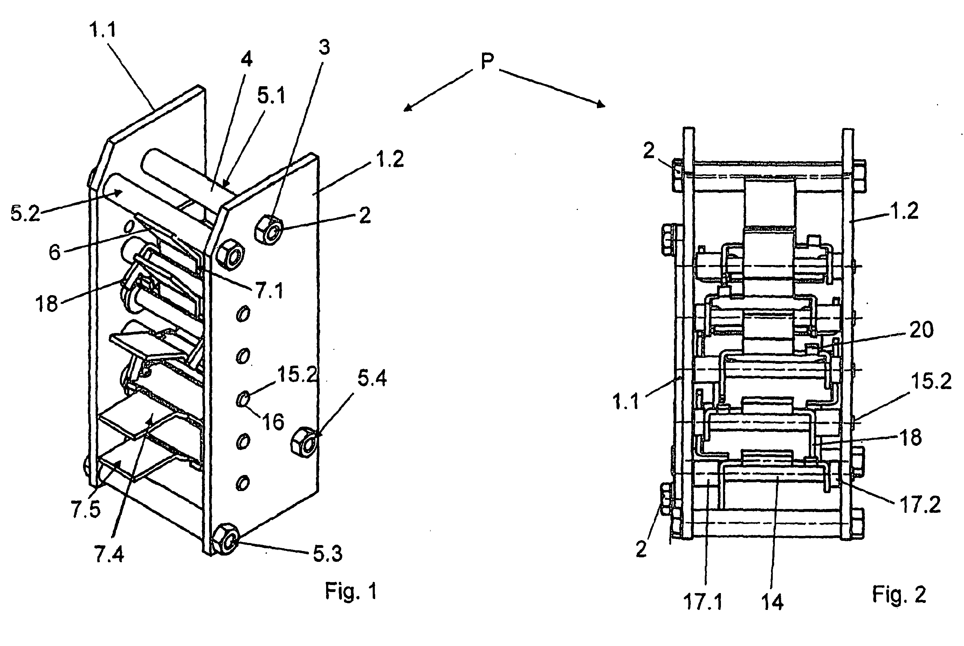

Eine erfindungsgemässe Stapelsäule P weist gemäss den Figuren 1 bis 4 zwei Seitenwangen 1.1 und 1.2 auf, die miteinander verbunden sind. Die Verbindung geschieht jeweils über einen Bolzen 2, der endwärtig jeweils einen Gewindeabschnitt aufweist und mit diesem Gewindeabschnitt die Seitenwangen 1.1 und 1.2 durchsetzt. Auf dem Gewindeabschnitt ist jeweils eine Mutter 3 aufgesetzt. Zwischen den Seitenwangen 1.1 und 1.2 umfängt den Bolzen 2 eine Abstandshülse 4.

Die Lage eines oberen Verbindungselementes 5.2 ist so gewählt, dass ein Tragarm 6 eines obersten Klinkenhebels 7.1 in Ruhelage an ihm anliegt und dabei zwischen den Seitenwangen 1.1 und 1.2 verschwindet

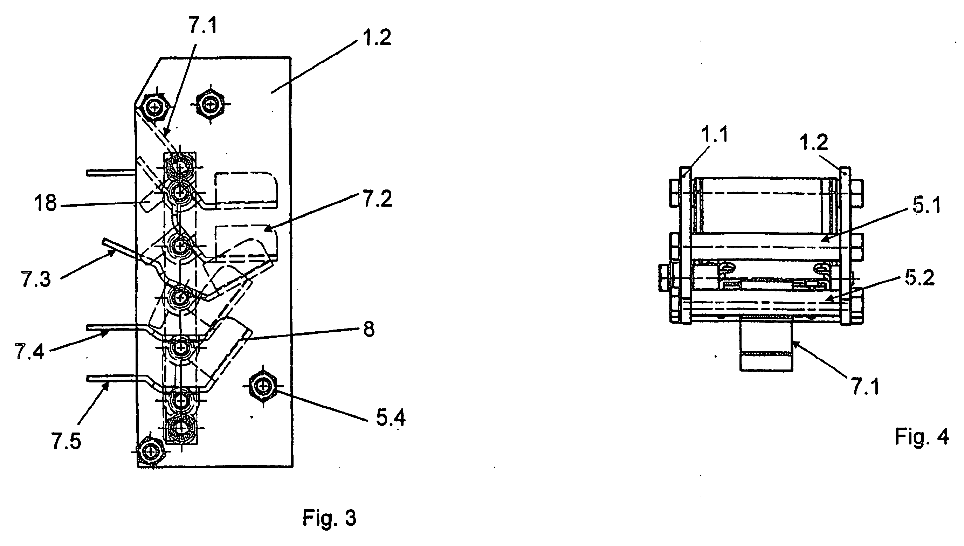

Die Lage des Verbindungselementes 5.4 ist wiederum so gewählt, dass ein Steuerarm 8 eines untersten Klinkenhebels 7.5 in Breitschaftsstellung an ihm anliegt, so dass dessen Tragarm 6, wie in Figur 3 für den Klinkenhebel 7.3 gezeigt, aus den Seitenwangen 1.1 und 1.2 herausschaut und bereit zur Aufnahme eines Lagergutes ist.

In dem vorliegenden Ausführungsbeispiel sind zwischen den Seitenwangen 1.1 und 1.2 nur fünf Klinkenhebel 7.1 bis 7.5 gezeigt, selbstverständlich können eine beliebige Anzahl vorgesehen werden, wobei dann die Seitenwangen 1.1 und 1.2 länger ausgebildet sind. Die Klinkenhebel 7.1 und 7.2 befinden sich in Ruhestellung, der Klinkenhebel 7.3 in Bereitschaftsstellung und die Klinkenhebel 7.4 und 7.5 in Arbeitsstellung.

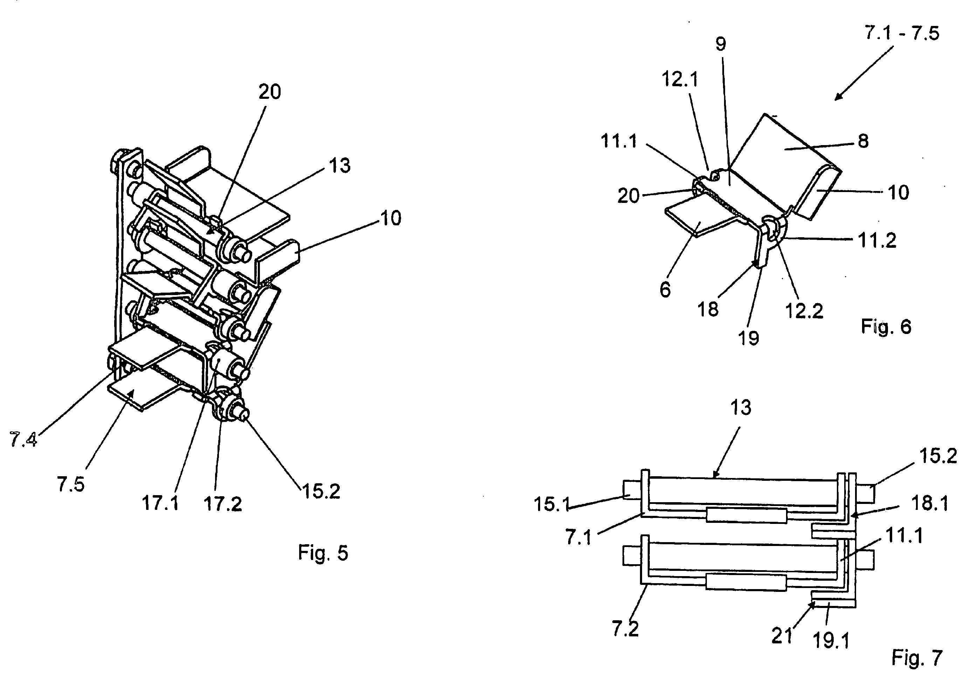

Ein erfindungsgemässer Klinkenhebel ist in Figur 6 gezeigt. Er wird bevorzugt aus einem Blechzuschnitt hergestellt, wie dies später beschrieben ist. Von einem Mittelteil 9, das rechteckförmig ausgestaltet ist, wird einerseits der Steuerarm 8 und andererseits der Tragarm 7 abgekantet. Die Ausgestaltung der Abkantung und der Umfang richtet sich nach den jeweiligen Erfordernissen, vor allem danach, in welcher Lage sich der Tragarm in Arbeitsstellung befinden soll. Von dem Steuerarm 8 ragt eine Seitenwange 10 auf, deren Funktion später beschrieben wird.

Seitlich vom Mittelteil 9 ragen zwei Zungen 11.1 und 11.2 etwa rechtwinklig nach unten ab, wobei im Bereich der Zungen 11.1 und 11.2 bzw. dem angrenzenden Bereich des Mittelteils 9 jeweils eine Ausnehmung 12.1 und 12.2 zu erkennen ist, welche der Aufnahme einer Drehachse 13 dient. Jede Drehachse 13 weist einen zwischen den Seitenwangen 1.1 und 1.2 aufgenommenen Bolzenabschnitt 14 mit grösserem Aussendurchmesser auf, an den beidends jeweils ein Lagerbolzen 15.1 und 15.2 anschliesst, der in einer Lagerbohrung 16 in den Seitenwangen 1.1 und 1.2 aufgenommen ist. Die Drehachse 13 dreht somit in diesen Lagerbohrungen 16. Um die Drehachse 13 oder mit ihr zusammen dreht der Klinkenhebel 7.1 bis 7.5.

Auf die Drehachse 13 sind auch Abstandsringe 17.1 bzw. 17.2 (siehe Figur 5) aufgesetzt, wobei diese Abstandsringe eine unterschiedliche Breite aufweisen können.

Von zumindest einer Zunge 11.2 ragt noch nach unten ein Stützelement 18 ab. Dessen Stirnfläche 19 kann zumindest teilweise gerundet ausgebildet sein.

Neben dem Tragarm 6 ist ferner eine Führungszunge 20 erkennbar, welche etwas nach oben aufragt. Diese Führungszunge 20 könnte auch zum Mittelteil 9 hin etwas gewölbt ausgebildet sein.

### Die Funktionsweise der vorliegenden Erfindung ist folgende:

Zur Herstellung des erfindungsgemässen Klinkenhebels 7.1 bis 7.5 wird ein entsprechender ebener Blechzuschnitt aus einem Blechstreifen herausgestanzt. Gleichzeitig werden auch die Ausnehmeungen 12.1 und 12.2 herausgestanzt. Danach erfolgt ein Abkanten der Zungen 11.1 und 11.2 im Bereich dieser Ausnehmungen 12.1 und 12.2, so dass eine Drehachse 13 hindurchgesteckt werden kann. Dabei befindet sich das Mittelteil 9 entweder oberhalb der Drehachse 13, wie in den Figuren 1 bis 5 gezeigt.

Vom Mittelteil 9 werden ferner der Tragarm 6 und der Steuerarm 8 abgekantet und vom Steuerarm 8 die Seitenwange 10.

Auf die Drehachse 13 werden ferner die Abstandsringe 17.1 bzw. 17.2 aufgesetzt, wobei deren Aussendurchmesser ausgewählt wird, je nach dem, wie weit der Klinkenhebel 7.1 bis 7.5 um die Drehachse 13 drehen soll. Der Aussendurchmesser und/oder die Höhe der Seitenwange 10 bestimmen den Drehweg.

Die gesamte Anordnung aus Drehachse 13, Klinkenhebel 7.1 bis 7.5 und Abstandsringen 17.1 bzw. 17.2 wird jetzt zwischen die Seitenwangen 1.1 und 1.2 eingesetzt, wobei die Lagerbolzen 15 in die entsprechenden Lagerbohrungen 16 eingreifen. Die Stapelsäule ist jetzt zur Aufnahme von Lagergütern bereit, wobei sich der unterste Klinkenhebel 7.5 in Bereitschaftsstellung befindet, da sein Steuerarm 8 an dem Verbindungselement 5.4 anliegt.

Wird jetzt der Klinkenhebel 7.5 von der Bereitschaftsstellung in die in Figur 3 gezeigte Arbeitsstellung gebracht, so schlägt nach einem kurzen Drehweg der Steuerarm 8 des untersten Klinkenhebels 7.5 an dem über ihm liegenden Steuerarm des Klinkenhebels 7.4 an und drückt diesen Steuerarm nach oben. Hierdurch gelangt der Klinkenhebel 7.4 von einer Ruhelage in die Bereitschaftsstellung.

Der Drehweg des Klinkenhebels 7.5 wird durch ein Anschlagen der Seitenwange 10 an dem Abstandsring 17.2 begrenzt.

Wird nun der Klinkenhebel 7.4 bzw. die nachfolgenden Klinkenhebel aus der jeweiligen Bereitschaftsstellung in die Arbeitsstellung gebracht, so gleitet das Stützelement 18 mit seiner Stirnfläche 19 kurz vor Erreichen der Arbeitsstellung auf der Führungszunge 20 auf und sitzt in Arbeitsstellung direkt dem Mittelteil 9 bzw. noch einem Bereich der Führungszunge 20 auf. Dadurch, dass die Führungszunge 20 etwas nach oben gebogen ist, wird eine Selbsthemmung bewirkt, so dass das Stützelement 18 nicht ohne äussere Einwirkung aus der Stützlage gelangt. Erst wenn die oberste Klinke 7.1 aus ihrer Arbeitsstellung gebracht wird, fällt der Steuerarm 8 auf den darunter liegenden Steuerarm, so dass auch dessen Stützelement aus der selbsthemmenden Rastlage gebracht wird und die Klinken dominoartig in die Ruhestellung (mit Ausnahme des untersten Klinkenhebels 7.5) gelangen.

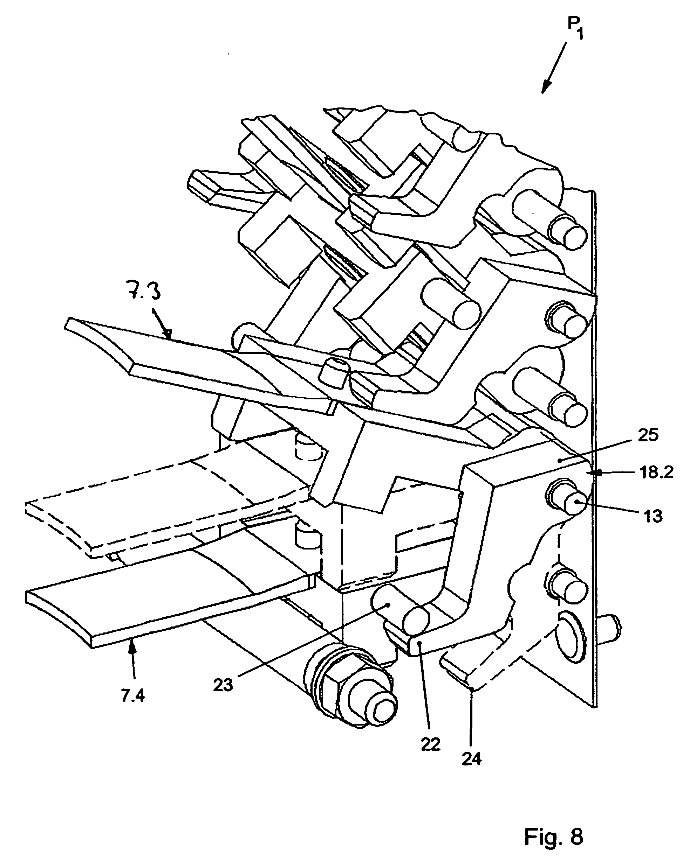

In Figur 7 ist ein Stützelement 18.1 gezeigt. Dieses ist nicht mehr einstückig mit dem Klinkenhebel 7.1 oder 7.2 verbunden, sondern als selbständiges Element der Drehachse 13 aufgesetzt. Es ist winklig ausgebildet und untergreift mit einem Stützschenkel 21 den Klinkenhebel 7.1 bzw. 7.2. Eine Stirnfläche 19.1 des Stützschenkels 21 ist bevorzugt ballig oder abgerundet ausgebildet und schwenkt in Arbeitsstellung über den Scheitel der Zunge 11.1 des darunter liegenden Klinkenhebels 7.2 sowie über den entsprechenden Scheitel des darunter liegenden Stützelementes und wird dort klemmend gehalten. Dieses Stützelement 18.1 kann aus Metall oder aber auch aus Kunststoff hergestellt sein. Auch andere Stützelement sind denkbar. Wichtig ist, dass sie zusammen mit dem Klinkenhebel um dessen Drehachse in eine Stützlage schwenken.

Bei einer Stapelsäule P₁ gemäss Figur 8 ist ein Stützelement 18.2 neben dem Klinkenhebel 7.3 auf der gleichen Drehachse 13 angeordnet. Dieser Klinkenhebel 7.3 ist in Bereitschaftsstellung gezeigt, gestrichelt ist angedeutet, wie er sich in Arbeitsstellung befindet.

Das Stützelement 18.2 bildet nach unten einen Fuss 22 aus, der mit einem seitlichen Bolzen 23 an dem darunter angeordneten Klinkenhebel 7.4 zusammenwirkt. Bolzen 23 und Fuss 22 sind so aufeinander abgestimmt, dass der Klinkenhebel 7.4 bei seinem Schwenkweg in die Arbeitsstellung den darüber angeordneten Klinkenhebel 7.3 in Bereitschaftsstellung mitnimmt.

Wird dann auch der Klinkenhebel 7.3 beladen und gelangt in Arbeitsstellung, drückt eine Fussspitze 24 oder auch eine ganze Fussfläche auf eine Stützfläche 25 des darunter angeordneten Stützelementes und legt so den darunter angeordneten Klinkenhebel 7.4 fest.

In den Figuren 7 und 8 ist eine Möglichkeit der Verriegelung der Klinkenhebel in Arbeitslage dargestellt. Von dem Klinkenhebel ist nur der oberste Klinkenhebel 7.1 gezeigt.

Oberhalb des Klinkenhebels 7.1 befinden sich in der Seitenwange 1.1 zwei etwa parallel verlaufende gebogene Langlöcher 26.1 und 26.2. Diese Langlöcher 26.1 und 26.2 dienen zum Führen einer Verriegelung 27. Diese durchsetzt das Langloch 26.1 mit einem Gewindeabschnitt 28, auf den eine Schraube 29 aufgesetzt ist. Ferner durchsetzt sie das Langloch 26.2 mit einem Druckbolzen 30. Druckbolzen 30 und Gewindeabschnitt 28 ragen von einem Schieber 31 ab, so dass beide von dem Schieber 31 in den Langlöchern 26.1 und 26.2 geführt werden können.

Schieber 31 und Seitenwange 1.1 werden von einem Riegelbolzen 32 durchsetzt, der in einer Zylinderhülse 33 federgelagert ist. Andemends der Zylinderhülse 33 ist der Riegelbolzen 32 mit einem Betätigungsknopf 34 verbunden.

In Figur 7 ist die Verriegelung 27 ausserhalb der Riegellage dargestellt. In dieser Stellung wird sie durch den Riegelbolzen 32 gehalten, der ein entsprechendes Loch 35 in der Seitenwange 1.1 durchsetzt.

Sobald sich die oberste Klinke 7.1 in Arbeitsstellung befindet, wird mit dem Betätigungsknopf 34 der Riegelbolzen 32 gegen die Federkraft aus dem Loch 35 gezogen und der Schieber 31 in seine in Figur 8 gestrichelt angedeutete Riegellage gebracht. In dieser drückt der Druckbolzen 30 auf den Klinkenhebel 7.1 und legt diesen in der Arbeitsstellung fest. In dieser Lage wird dann der Schieber 31 nach Loslassen des Betätigungsknopfes 34 gehalten, wobei der Riegelbolzen 32 in ein weiteres Loch 36 in der Seitenwange 1.1 einfährt.

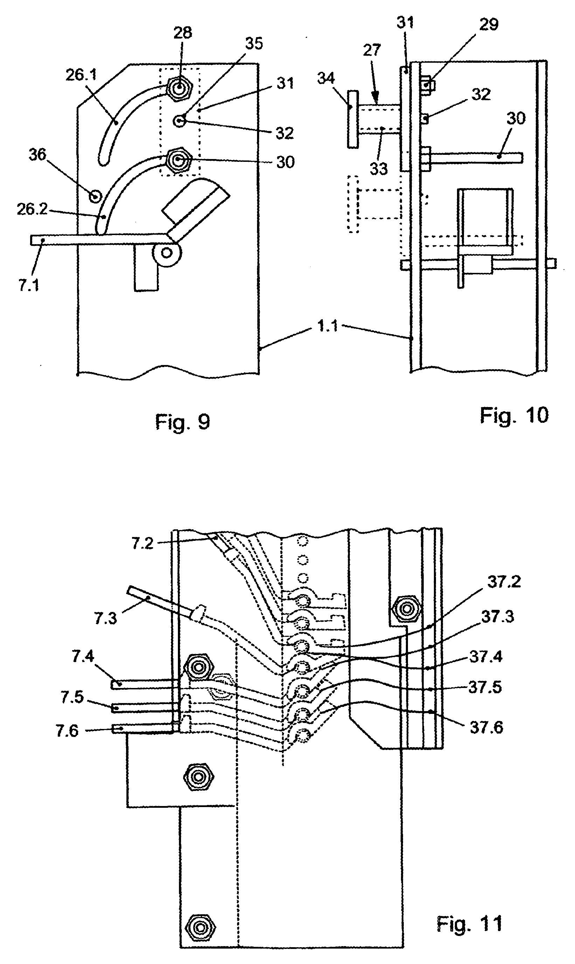

Gemäss Figur 9 sollen den Klinkenhebeln 7.2 bis 7.6 jeweils Federn 37.2 bis 37.6 zugeordnet sein. Diese Federn befinden sich an einem Federrechen 38. Sie sind so ausgelegt, dass ein Schwenken der Klinkenhebel 7.2 - 7.6 von einer Ruhelage in eine Arbeitslage gegen die Kraft dieser Federn erfolgt. Das bedeutet, dass bspw. bei der Aufhebung der Verriegelung gemäss den Figuren 7 und 8 die Klinkenhebel 7.2 - 7.5 bis auf den untersten Klinkenhebel 7.6 in ihre Ruhelage zurückgelangen. Der unterste Klinkenhebel 7.6 wird durch seine Feder 37.6 in Bereitschaftsstellung geführt. Hierdurch wird insbesondere ein Lösen der Stützelemente aus deren Stützlage verbessert.

### Positionszahlenliste

| | | | | | |
|---|---|---|---|---|---|
| 1 | Seitenwange | 34 | Betätigungsknopf | 67 | |
| 2 | Bolzen | 35 | Loch | 68 | |
| 3 | Mutter | 36 | Loch | 69 | |
| 4 | Abstandshülse | 37 | Federn | 70 | |
| 5 | Verbindungselement | 38 | Federrechen | 71 | |
| 6 | Tragarm | 39 | | 72 | |
| 7 | Klinkenhebel | 40 | | 73 | |
| 8 | Steuerarm | 41 | | 74 | |
| 9 | Mittelteil | 42 | | 75 | |
| 10 | Seitenwange | 43 | | 76 | |
| 11 | Zunge | 44 | | 77 | |
| 12 | Ausnehmung | 45 | | 78 | |
| 13 | Drehachse | 46 | | 79 | |
| 14 | Bolzenabschnitt | 47 | | | |
| 15 | Lagerbolzen | 48 | | | |
| 16 | Lagerbohrung | 49 | | | |
| 17 | Abstandsring | 50 | | | |
| 18 | Stützelement | 51 | | | |
| 19 | Stirnfläche | 52 | | | |
| 20 | Führungszunge | 53 | | | |
| 21 | Stützschenkel | 54 | | P | Stapelsäule |
| 22 | Fuss | 55 | | | |
| 23 | Bolzen | 56 | | | |
| 24 | Fussspitze | 57 | | | |
| 25 | Stützfläche | 58 | | | |
| 26 | Langloch | 59 | | | |
| 27 | Verriegelung | 60 | | | |
| 28 | Gewindeabschnitt | 61 | | | |
| 29 | Schraube | 62 | | | |
| 30 | Druckbolzen | 63 | | | |
| 31 | Schieber | 64 | | | |
| 32 | Riegelbolzen Zylinderbuchse | 65 | | | |
| 33 | | 66 | | | |
| | | | | | |

## Patentansprüche

1. Stapelsäule zum Halten von Lagergütern, insbesondere von Karosserieteilen auf Tragarmen (6) von Klinkenhebeln (7.1 - 7.6), die um eine Drehachse (13) von einer Ruhestellung in eine Arbeitsstellung drehen, wobei mehrere Klinkenhebel (7.1 - 7.6) übereinander oder nebeneinander angeordnet sind und in Wirkverbindung stehen und mit dem Klinkenhebel (7.1 - 7.6) ein Stützelement (18, 18.1, 18.2) mitdreht, welches in Arbeitsstellung auf oder an einem vorgängigen Klinkenhebel (7.1 - 7.6) aufsitzt oder anliegt,
**dadurch gekennzeichnet,**
**dass** der Klinkenhebel (7.1 - 7.5) aus einem Blechzuschnitt besteht, von dem das Stützelement (18) abgekantet ist.

2. Stapelsäule nach Anspruch 1, **dadurch gekennzeichnet, dass** von dem Blechzuschnitt auch zumindest ein Steuerarm (8) abgekantet ist.

3. Stapelsäule nach Anspruch 2, **dadurch gekennzeichnet, dass** von dem Steuerarm (8) eine aufragende Seitenwange (10) aufgekantet ist, die in Arbeitsstellung der Drehachse (13) des nachfolgenden Klinkenhebels (7.1 - 7.6) anliegt.

4. Stapelsäule nach einem der Ansprüche 1 bis 3, **dadurch gekennzeichnet, dass** das Stützelement (18.2) einen Fuss (22) ausbildet, dem ein seitlicher Bolzen (23) des vorgehenden Klinkenhebels (7.4) zugeordnet ist.

5. Stapelsäule nach wenigstens einem der Ansprüche 1 bis 4, **dadurch gekennzeichnet, dass** der Klinkenhebel (7.1 - 7.5) eine Führungszunge (20) für ein Aufgleiten des Stützelementes (18) aufweist.

6. Stapelsäule nach Anspruch 5, **dadurch gekennzeichnet, dass** die Führungszunge (20) zumindest teilweise nach oben gerichtet, insbesondere gewölbt ausgebildet ist.

7. Stapelsäule nach wenigstens einem der Ansprüche 1 bis 6, **dadurch gekennzeichnet, dass** dem obersten Klinkenhebel (7.1) eine Verriegelung (27) zugeordnet ist, bei der ein Schieber (31) mit zumindest einem, bevorzugt zwei Bolzen (28, 32) od. dgl., ein bzw. zwei parallel und bogenförmig verlaufende Langlöcher (26.1, 26.2) durchsetzt, wobei in Riegellage ein Bolzen (32) auf den obersten Klinkenhebel (7.1) drückt.

8. Stapelsäule nach Anspruch 7, **dadurch gekennzeichnet, dass** der Schieber durch einen Riegelbolzen (32) in oder ausserhalb der Riegellage festlegbar ist.

9. Stapelsäule nach wenigstens einem der Ansprüche 3 bis 8, **dadurch gekennzeichnet, dass** im Bereich der Seitenwange (10) der Drehachse (13) ein Abstandsring (17.1, 17.2) aufgesetzt ist, dessen Aussendurchmesser wählbar ist.

10. Stapelsäule nach wenigstens einem der Ansprüche 1 bis 8, **dadurch gekennzeichnet, dass** zumindest einigen Klinkenhebeln (7.1 - 7.6) eine Feder (37.2 - 37-6) zugeordnet ist, welche den jeweiligen Klinkenhebel in Ruhelage bewegt.

11. Stapelsäule nach Anspruch 10, **dadurch gekennzeichnet, dass** die Federn (37.2 - 37.6) an einem Federrechen (38) angeordnet sind.

12. Verfahren zum Herstellen eines Klinkenhebels zum Einsatz in eine Stapelsäule zum Halten von Lagergütern, insbesondere von Karosserieteilen auf Tragarmen (6) von Klinkenhebeln (7.1 - 7.5), die um eine Drehachse (13) von einer Ruhestellung in eine Arbeitsstellung drehen, wobei mehrere Klinkenhebel (7.1 - 7.5) übereinander oder nebeneinander angeordnet sind und in Wirkverbindung stehen, **dadurch gekennzeichnet, dass** bei einem Blechzuschnitt jeweils seitlich eines Mittelteils (9) zwischen dem Tragarm (6) und einem Steuerarm (8) Zungen (11.1, 11.2) vorgesehen und diese mit jeweils einer Ausnehmung (12.1, 12.2) versehen werden, die teilweise in das Mittelteil (9) hineinreicht, und jede Zunge (11.1, 11.2) im Bereich der Ausnehmung (12.1, 12.2) abgebogen wird, wobei von zumindest einer Zunge (11.2) ein dieser einstückig angeformtes Stützelement (18) abragt.

13. Verfahren nach Anspruch 12, **dadurch gekennzeichnet, dass** vom Mittelteil (9) der Tragarm (6) und/oder der Steuerarm (8) abgekantet wird.

14. Verfahren nach Anspruch 12 oder 13, **dadurch gekennzeichnet, dass** vom Steuerarm (8) eine Seitenwange (10) aufgekantet wird.

## Claims

1. Stacking column for holding stock items, in particular vehicle body parts on brackets (6) of pawl levers (7.1 - 7.6), which rotate about a hinge pin (13) from a normal position into a working position, wherein a plurality of pawl levers (7.1 - 7.6) are disposed above or alongside one another and are in working connection and a support element (18, 18.1, 18.2), which in working position rests on or lies adjacent to a preceding pawl lever (7.1 - 7.6), co-rotates with the pawl lever (7.1 - 7.6),
**characterized in**
**that** the pawl lever (7.1 - 7.5) comprises a sheet metal blank, from which the support element (18) [is] bent down.

2. Stacking column according to claim 1, **characterized in that** at least one control arm (8) is likewise bent down from the sheet metal blank.

3. Stacking column according to claim 2, **characterized in that** bent up from the control arm (8) is an upwardly projecting side piece (10), which in working position lies adjacent to the hinge pin (13) of the succeeding pawl lever (7.1 - 7.6).

4. Stacking column according to one of claims 1 to 3, **characterized in that** the support element (18.2) forms a foot (22), with which a lateral bolt (23) of the preceding pawl lever (7.4) is associated.

5. Stacking column according to at least one of claims 1 to 4, **characterized in that** the pawl lever (7.1 - 7.5) has a guide tongue (20) for upward sliding of the support element (18).

6. Stacking column according to claim 5, **characterized in that** the guide tongue (20) is of an at least partially upwardly directed, in particular curved design.

7. Stacking column according to at least one of claims 1 to 6, **characterized in that** there is associated with the uppermost pawl lever (7.1) a locking device (27), whereby a slide (31) with at least one, preferably two bolts (28, 32) or the like penetrates one and/or two oblong holes (26.1, 26.2) extending parallel and in an arc-shaped manner, wherein in locked position a bolt (32) presses upon the uppermost pawl lever (7.1).

8. Stacking column according to claim 7, **characterized in that** the slide is fastenable in or outside of the locked position by means of a locking bolt (32).

9. Stacking column according to at least one of claims 3 to 8, **characterized in that** in the region of the side piece (10) there is mounted on the hinge pin (13) a spacer ring (17.1, 17.2), the outside diameter of which is selectable.

10. Stacking column according to at least one of claims 1 to 8, **characterized in that** there is associated with at least some of the pawl levers (7.1 - 7.6) a spring (37.2 - 37.6), which moves the respective pawl lever into normal position.

11. Stacking column according to claim 10, **characterized in that** the springs (37.2 - 37.6) are disposed on a spring rake (38).

12. Method of manufacturing a pawl lever for fitting into a stacking column for holding stock items, in particular vehicle body parts on brackets (6) of pawl levers (7.1 - 7.5), which rotate about a hinge pin (13) from a normal position into a working position, wherein a plurality of pawl levers (7.1 - 7.5) are disposed above or alongside one another and are in working connection, **characterized in that** in a sheet metal blank in each case laterally of a middle part (9) between the bracket (6) and a control arm (8) tongues (11.1, 11.2) are provided and said tongues are provided in each case with a recess (12.1, 12.2) that extends partially into the middle part (9), and each tongue (11.1, 11.2) is bent down in the region of the recess (12.1, 12.2), wherein projecting down from at least one tongue (11.2) is a support element (18) integrally moulded on said tongue.

13. Method according to claim 12, **characterized in that** the bracket (6) and/or the control arm (8) is bent down from the middle part (9).

14. Method according to claim 12 or 13, **characterized in that** a side piece (10) is bent up from the control arm (8).

## Revendications

1. Colonne d'empilage pour maintenir des produits à stocker, en particulier d'éléments de carrosserie, sur des bras-supports (6) de leviers à poignée (7.1 à 7.6) tournant autour d'un axe de rotation (13) d'une position de repos en une position de travail, plusieurs leviers à poignée (7.1 à 7.6) étant disposés l'un au-dessus ou l'un à côté de l'autre et étant reliés entre eux en fonctionnement et avec le levier à poignée (7.1 à 7.6) tournant un élément de support (18, 18.1, 18.2) qui, en position de travail, se trouve ou s'appuie sur ou contre un levier à poignée précédent (7.1 à 7.6),
**caractérisé par le fait**
**que** le levier à poignée (7.1 à 7.5) consiste en une découpe de tôle, repliée selon un angle par rapport à l'élément de support (18).

2. Colonne d'empilage selon la revendication 1, **caractérisée par le fait qu'**à partir de la découpe de tôle est également replié selon un angle au moins un bras de commande (8).

3. Colonne d'empilage selon la revendication 2, **caractérisée par le fait qu'**à partir du bras de commande (8) est repliée selon un angle une joue latérale (10) s'élevant vers le haut, laquelle s'appuie, en position de travail, contre l'axe de rotation (13) du levier à poignée suivant (7.1 à 7.6).

4. Colonne d'empilage selon l'une des revendications 1 à 3, **caractérisée par le fait que** l'élément de support (18.2) constitue un pied (22) auquel est associé un boulon latéral (23) du levier à poignée précédent (7.4).

5. Colonne d'empilage selon au moins l'une des revendications 1 à 4, **caractérisée par le fait que** le levier à poignée (7.1 à 7.5) présente une languette de guidage (20) destinée au glissement sur celle-ci de l'élément de support (18).

6. Colonne d'empilage selon la revendication 5, **caractérisée par le fait que** la languette de guidage (20) est réalisée au moins partiellement orientée vers le haut, en particulier bombée.

7. Colonne d'empilage selon au moins l'une des revendications 1 à 6, **caractérisée par le fait qu'**au levier à poignée supérieur (7.1) est associé un verrouillage (27) dans lequel un verrou (31) avec au moins un, de préférence deux, boulon (28, 32) ou autre, passe à travers un ou deux trous oblongs (26.1. 26.2) s'étendant en parallèle et en forme d'arc, un boulon (32) appuyant, en position de verrouillage, sur le levier à poignée supérieur (7,1).

8. Colonne d'empilage selon la revendication 7, **caractérisée par le fait que** le verrou peut être fixé par un boulon de verrouillage (32) dans ou en dehors de la position de verrouillage.

9. Colonne d'empilage selon au moins l'une des revendications 3 à 8, **caractérisée par le fait qu'**à l'endroit de la joue latérale (10) est placée sur l'axe de rotation (13) une bague d'écartement (17.1, 17.2) dont le diamètre extérieur peut être sélectionné.

10. Colonne d'empilage selon au moins l'une des revendications 1 à 8, **caractérisée par le fait qu'**à au moins certains leviers à poignée (7.1 à 7.6) est associé un ressort (37.2 à 37.6) qui déplace le levier à poignée respectif en position de repos.

11. Colonne d'empilage selon la revendication 10, **caractérisée par le fait que** les ressorts (37.2 à 37.6) sont disposés sur un râteau à ressorts (38).

12. Procédé de fabrication d'un levier à poignée destiné à être utilisé dans une colonne d'empilage pour maintenir des produits à stocker, en particulier d'éléments de carrosserie, sur des bras-supports (6) de leviers à poignée (7.1 à 7.6) tournant autour d'un axe de rotation (13) d'une position de repos en une position de travail, plusieurs leviers à poignée (7.1 à 7.5) étant disposés l'un au-dessus ou l'un à côté de l'autre et étant reliés entre eux en fonctionnement, **caractérisé par le fait que** dans une découpe de tôle sont chaque fois prévues, latéralement par rapport à une partie centrale (9), entre le bras de support (6) et un bras de commande (8), des languettes (11.1, 11.2) et que celles-ci sont pourvues, chacune, d'un évidement (12.1, 12.2) qui pénètre partiellement dans la partie centrale (9), et que chaque languette (11.1, 11.2) est recourbée à l'endroit de l'évidement (12.1, 12.2), d'au moins une languette (11.2) faisant saillie un élément de support (18) formé d'une seule pièce avec cette dernière.

13. Procédé selon la revendication 12, **caractérisé par le fait qu'**à partir de la partie centrale (9) est replié suivant un angle le bras de support (6) et/ou le bras de commande (8).

14. Procédé selon la revendication 12 ou 13, **caractérisé par le fait qu'**à partir du bras de commande (8) est repliée suivant un angle une joue latérale (10).
